(19) Europäisches Patentamt
European Patent Office
Office européen des brevets

(11) **EP 2 632 217 A2**

(12) **EUROPEAN PATENT APPLICATION**
published in accordance with Art. 153(4) EPC

(43) Date of publication:
**28.08.2013 Bulletin 2013/35**

(51) Int Cl.:
**H04W 68/00** (2009.01)

(21) Application number: **12719918.0**

(22) Date of filing: **10.01.2012**

(86) International application number:
**PCT/CN2012/070179**

(87) International publication number:
**WO 2012/062225 (18.05.2012 Gazette 2012/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2010 CN 201010538735**

(71) Applicant: **Huawei Technologies Co., Ltd. Shenzhen, Guangdong 518129 (CN)**

(72) Inventors:
• **BAI, Wei**
**Shenzhen**
**Guangdong 518129 (CN)**

• **YU, Zheng**
**Shenzhen**
**Guangdong 518129 (CN)**

(74) Representative: **Körber, Martin Hans et al**
**Mitscherlich & Partner**
**Sonnenstraße 33**
**80331 München (DE)**

Remarks:
The filing date of the international application is within two months from the date of expiration of the priority period (R. 26bis.3 PCT).

(54) **METHOD, BASE STATION AND SYSTEM FOR PAGING RESOURCE COORDINATION IN A HETEROGENEOUS NETWORK**

(57) Embodiments of the present invention relate to the field of communications technologies, and disclose a method, a base station, and a system for coordinating paging resource in a heterogeneous network. The method for coordinating paging resource includes: determining, by a first base station, a user equipment in connected state; calculating, by the first base station, a subframe number of a subframe used for sending paging information and a frame number of a paging frame to which the subframe belongs, where the paging information is used for paging the user equipment in connected state; and sending, by the first base station, the calculated subframe number and the calculated frame number of the paging frame to a second base station, so that the second base station configures a subframe corresponding to the subframe number of a paging frame corresponding to the frame number as an almost blank subframe, or the second base station stops sending information in a subframe corresponding to the subframe number of a paging frame corresponding to the frame number. Implementing the embodiments of the present invention may avoid paging interference to a user equipment in connected state in a heterogeneous network and reduce a waste of resources in an interfering cell.

FIG. 2

**Description**

This application claims priority to Chinese Patent Application No. 201010538735.1, filed with the Chinese Patent Office on November 10, 2010 and entitled "METHOD, BASE STATION, AND SYSTEM FOR COORDINATING PAGING RESOURCE IN A HETEROGENEOUS NETWORK", which is incorporated herein by reference in its entirety.

**FIELD OF THE INVENTION**

The present invention relates to the field of communications technologies, and in particular, to a method, a base station, and a system for coordinating paging resource in a heterogeneous network.

**BACKGROUND OF THE INVENTION**

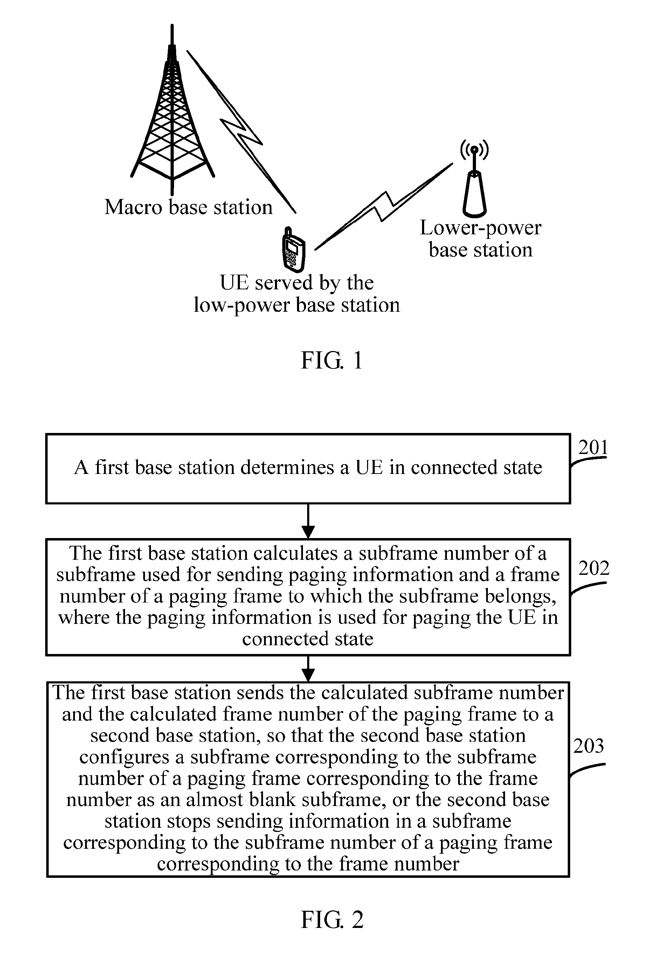

In a long term evolution (Long term evolution, LTE) wireless communication system, a macro base station and a low-power base station may be simultaneously deployed in a cell of a same network, and then such a network is called a heterogeneous network (Heterogeneous Network, HN), where the low-power base station may include but is not limited to a micro base station, a pico base station, and a relay node. A low-power base station may be used to cover a hot spot area, an indoor area, a blind spot area, or an edge of a cell to improve average throughput of the cell, throughput on the edge of the cell, and the like. On the heterogeneous network, the macro base station and the low-power base station are usually configured with same spectrum resources so as to maximally improve spectrum utilization efficiency of a system. This causes mutual interference between the macro base station and the low-power base station. As shown in FIG. 1, a macro base station (interfering base station) generates paging interference to a user equipment (User equipment, UE) served by a low-power base station (target base station); and similarly, the low-power base station (interfering base station) also generates paging interference to a UE served by the macro base station (target base station).

Therefore, an outstanding issue in a heterogeneous network is to eliminate paging interference generated by an interfering base station to a UE served by a target base station.

**SUMMARY OF THE INVENTION**

Embodiments of the present invention provide a method and a base station for coordinating paging resource in a heterogeneous network, which may avoid paging interference to a UE in connected state in a heterogeneous network and reduce a waste of resources in an interfering cell.

According to one aspect, the present invention provides a method for coordinating paging resource in a heterogeneous network. The method includes: determining, by a first base station, a user equipment in connected state; calculating, by the first base station, a subframe number of a subframe used for sending paging information and a frame number of a paging frame to which the subframe belongs, where the paging information is used for paging the user equipment in connected state; and sending, by the first base station, the calculated subframe number and the calculated the frame number of the paging frame to a second base station, so that the second base station configures a subframe corresponding to the subframe number of a paging frame corresponding to the frame number as an almost blank subframe, or the second base station stops sending information in a subframe corresponding to the subframe number of a paging frame corresponding to the frame number.

According to another aspect, the present invention provides a base station, which is located together with a second base station in a heterogeneous network. The base station includes: a determining unit, adapted to determine a user equipment in connected state; a calculating unit, adapted to calculate a subframe number of a subframe used for sending paging information and a frame number of a paging frame to which the subframe belongs, where the paging information is used for paging the user equipment in connected state determined by the determining unit; and a sending unit, adapted to send the subframe number and the frame number of the paging frame calculated by the calculating unit to the second base station, so that the second base station configures a subframe corresponding to the subframe number of a paging frame corresponding to the frame number as an almost blank subframe, or the second base station stops sending information in a subframe corresponding to the subframe number of a paging frame corresponding to the frame number.

According to still another aspect, the present invention further provides a system for coordinating paging resource in a heterogeneous network, including the base station as a first base station and further including a second base station. The second base station is adapted to receive the subframe number and the frame number of the paging frame from the first base station, and configure a subframe corresponding to the subframe number of a paging frame corresponding to the frame number as an almost blank subframe, or stop sending information in a subframe corresponding to the subframe number of a paging frame corresponding to the frame number..

In the embodiments of the present invention, after determining a user equipment in connected state, a first base station calculates a subframe number of a subframe required for paging the user equipment and a frame number of a paging frame to which the subframe belongs, and sends the calculated subframe number and the calculated frame number of the paging frame to a second base station, so that the second base station configures a subframe corresponding to the subframe number of a paging frame corresponding to the frame number as an almost blank subframe, or the second base station stops sending information in a subframe corresponding to the subframe number of a paging frame corresponding to the frame number, thereby avoiding paging interference generated by the second base station to the user equipment in connected state in the first base station. The technical solution provided in the embodiments of the present invention is capable of eliminating paging interference generated by the second base station to a user equipment in connected state in the first base station, thereby avoiding interference generated by the second base station to paging information of a user equipment in connected state in the first base station. In addition, because the technical solution is to coordinate paging resource for a user equipment in connected state instead of a user equipment that is in idle state and usually subject to little paging interference, a resource waste brought by coordinating paging resource for all user equipments in connected or idle state is avoided.

## BRIEF DESCRIPTION OF THE DRAWINGS

To describe the technical solutions in the embodiments of the present invention or in the prior art more clearly, the following briefly introduces the accompanying drawings for describing the embodiments. Apparently, the accompanying drawings in the following description show merely some embodiments of the present invention, and persons of ordinary skill in the art may still derive other drawings from these accompanying drawings without creative efforts.

FIG. 1 is a schematic diagram of a scenario of paging interference between a macro base station and a low-power base station in the prior art;

FIG. 2 is a schematic flowchart of a method for coordinating paging resource in a heterogeneous network according to an embodiment of the present invention;

FIG. 3 is a schematic diagram of a scenario of paging interference between a macro base station and a pico base station according to an embodiment of the present invention;

FIG. 4 is a schematic diagram of another scenario of paging interference between a macro base station and a pico base station according to an embodiment of the present invention;

FIG. 5 is a schematic structural diagram of a base station according to an embodiment of the present invention;

FIG. 6 is a schematic structural diagram of another base station according to an embodiment of the present invention; and

FIG. 7 is a schematic structural diagram of a system for coordinating paging resource in a heterogeneous network according to an embodiment of the present invention.

## DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

Refer to FIG. 2, which is a schematic flowchart of a method for eliminating interference in a heterogeneous network according to an embodiment of the present invention. The method may include the following steps:

201. A first base station determines a UE in connected state.

The first base station may be a macro base station, or a low-power base station such as a micro base station, a pico base station, or a relay node instead of being restricted in the embodiment of the present invention.

For the first base station, a UE within its coverage is in idle or connected state. Major work of a UE in idle state is to detect broadcast information, control information, paging information, and the like sent by the first base station, whereas major work of a UE in connected state is to exchange data information, service information, and the like with the first base station. Therefore, the first base station may determine whether a UE is currently in idle or connected state by detecting the working state of the UE.

202. The first base station calculates a subframe number of a subframe used for sending paging information and a frame number of a paging frame to which the subframe belongs, where the paging information is used for paging the UE in connected state.

In the prior art, paging is implemented by using a physical downlink control channel (Physical downlink control channel, PDCCH) and a physical downlink sharing channel (Physical downlink sharing channel, PDSCH). A paging-radio network temporary identifier (Paging-Radio network temporary identifier, P-RNTI) is used on a PDCCH to perform scrambling; and paging information is carried on a PDSCH. For a time division duplex (Time Division Duplexing, TDD) system, paging information is transmitted in one or more of subframes 0, 1, 5, and 6 of each radio frame. For a frequency division duplex (Frequency Division Duplexing, FDD) system, paging information is transmitted in one or more of subframes 0, 4, 5, and 9 of each radio frame.

In an LTE wireless communication system, a base station sends paging information through a subframe and a paging frame to which the subframe belongs. For example, for a time division duplex (Time Division Duplexing, TDD) system, paging information is transmitted in one or more of subframes 0, 1, 5, and 6 of each radio frame; and for a frequency division duplex (Frequency Division Duplexing, FDD) system, paging information is transmitted in one or more of subframes 0, 4, 5, and 9 of each radio frame. Paging is implemented by using a physical downlink control channel (Physical downlink control channel, PDCCH) and a physical downlink sharing channel (Physical downlink sharing channel, PDSCH). A paging-radio network temporary identifier (Paging-Radio network temporary identifier, P-RNTI) is used on a PDCCH to perform scrambling, and a UE uses a P-RNTI to detect a PDCCH. In this way, the UE may subsequently use the P-RNTI to descramble a detected PDCCH, read a PDSCH indicated in PDCCH scheduling after the PDCCH is correctly descrambled, obtain related data (including an equivalent identifier UE_ID of the UE) on the PDSCH, and transmit the related data through a paging channel (Paging Channel, PCH) to a media access control layer, so that the base station can page the UE.

In an optional implementation manner, the first base station may calculate, according to a pre-configured paging parameter nB, a paging opportunity i_s used for sending paging information; and then further determine, according to the paging opportunity i_s, a subframe number of a subframe used for sending paging information. The calculating, by the first base station, according to a pre-configured paging parameter nB, a paging opportunity i_s used for sending paging information and determining, according to the paging opportunity i_s, a subframe number of a subframe used for sending paging information is specifically implemented in the following manner:

(1) The first base station calculates, according to the following formula (1), a paging opportunity i_s used for sending paging information:

$$i\_s = floor \, (UE\_ID/N) \, mod \, N_s \qquad (1)$$

where floor (*) indicates rounding, that is, getting an integer of a quotient of UE_ID/N; UE_ID indicates an equivalent identifier of a UE in connected state; N is a minimum value between T and the paging parameter nB pre-configured by the first base station; T is an actual paging cycle of the UE in connected state; $N_s$ is a maximum value between 1 and nB/T; and mod indicates modulo operation. A value range of the paging parameter nB pre-configured by the first base station may be {4T, 2T, T, T/2, T/4, T/8, T/16, T/32}. In a specific implementation process, nB may be pre-configured by high-layer signaling on a target base station; and a value range of the T may be {32, 64, 128, 256} in frames.

In an LTE wireless communication system, each UE has a specific paging cycle $T_s$. A value range of $T_s$ may be {32, 64, 128, 256} in frames. In addition, each base station broadcasts a discontinuous reception (Discontinuous Reception, DRX) cycle $T_c$ to UEs within its coverage. A value range of $T_c$ may be {32, 64, 128, 256} in frames. Therefore, for a certain UE, its actual paging cycle T may specifically take a minimum value between the broadcast DRX cycle $T_c$ and the specific paging cycle $T_s$.

For example, it is assumed that the broadcast DRX cycle $T_c$ of the first base station is 32 frames and the specific paging cycle $T_s$ of a UE in connected state in the first base station is 64 frames. Then the actual paging cycle T of the UE in connected state takes a minimum value between 64 frames and 32 frames, that is, T = 32 frames. For another example, it is assumed that the broadcast DRX cycle $T_c$ of the first base station is 128 frames and the specific paging cycle $T_s$ of a UE in connected state in the first base station is 64 frames. Then the actual paging cycle T of the UE in connected state takes a minimum value between 128 frames and 64 frames, that is, T = 64 frames. As can be seen, the actual paging cycle T of a UE in connected state in the first base station is less than or equal to $T_c$.

In an optional implementation manner, the equivalent identifier UE_ID of a UE in connected state in the first base station may specifically take a value of mod 1024 of an international mobile subscriber identification number (International Mobile Subscriber Identification Number, IMSI) of the UE.

(2) The first base station obtains a subframe number of a subframe used for sending paging information from a saved mapping between i_s and subframe number according to the calculated i_s.

In the embodiment of the present invention, after calculating the paging opportunity i_s for sending paging information, the first base station may obtain the subframe number of a subframe used for sending paging information from saved mappings between i_s and subframe number as shown in Table 1 or Table 2. Table 1 corresponds to an LTE TDD system, and Table 2 corresponds to an LTE FDD system.

**Table 1 Mappings between i_s and subframe number**

| Ns | i_s = 0 | i_s = 1 | i_s = 2 | i_s = 3 |
|---|---|---|---|---|
| 1 | Subframe 0 | Not applicable | Not applicable | Not applicable |
| 2 | Subframe 0 | Subframe 5 | Not applicable | Not applicable |
| 4 | Subframe 0 | Subframe 1 | Subframe 5 | Subframe 6 |

**Table 2 Mappings between i_s and subframe number**

| Ns | i_s = 0 | i_s = 1 | i_s = 2 | i_s = 3 |
|---|---|---|---|---|
| 1 | Subframe 9 | Not applicable | Not applicable | Not applicable |
| 2 | Subframe 4 | Subframe 9 | Not applicable | Not applicable |
| 4 | Subframe 0 | Subframe 4 | Subframe 5 | Subframe 9 |

For example, when the value of the paging parameter nB of the first base station is T, $N_s$ is a maximum value between 1 and nB/T, that is, the value of $N_s$ is 1. Substitute $N_s$ = 1 in the preceding formula (1). Then it is known that a result of mod 1 of any numerical value is always 0, that is i_s = 0. Taking Table 1 as an example, as can be seen from Table 1, the subframe used by the first base station to send paging information is specially subframe 0 (that is, the subframe number is 0). When the value of the paging parameter nB of the first base station is 2T, $N_s$ is the maximum value between 1 and nB/T, that is, the value of $N_s$ is 2. Substitute $N_s$ = 2 in the preceding formula (1). Then it is known that a result of mod 2 of any numerical value may be 0 or 1, that is i_s = 0 or i_s = 1. As can be seen from Table 1, the subframe used by the first base station to send paging information is specially subframe 0 (that is, the subframe number is 0) or subframe 5 (that is, the subframe number is 5).

In an optional embodiment, the first base station may calculate, according to the pre-configured paging parameter nB, a frame number of a paging frame used for sending paging information. In an LTE TDD system, each paging frame contains 10 subframes. One or more of subframes 0, 1, 5, and 6 of each paging frame may be used for sending paging information. The calculating, by the first base station, according to the pre-configured paging parameter nB, a frame number of a paging frame used for sending paging information is specifically as follows: The first base station calculates, according to the following formula (2), the frame number SFN of a paging frame to which the subframe used by the first base station to send paging information belongs:

$$SFN \bmod T = (T/N) \times (UE\_ID \bmod N) \qquad (2)$$

where SFN indicates the frame number of a paging frame to which the subframe used by the first base station to send paging information belongs; T indicates the actual paging cycle of the UE in connected state in the first base station; UE_ID indicates the equivalent identifier of the UE in connected state in the first base station; and N is a minimum value between T and the paging parameter nB.

For example, if the value of the paging parameter nB of the first base station is T, N is the minimum value between T and nB, that is, N = T. Substitute N = T in the preceding formula (2). Then the preceding formula (2) changes to the following formula (3):

$$SFN \bmod T = UE\_ID \bmod T \qquad (3)$$

For different UEs, their equivalent identifier UE_IDs are different. Therefore, the equivalent identifier UE_ID in the formula (3) may be regarded as a variable. As can be seen from the preceding formula (3), in order that the first base station supports paging of all UEs in connected state within its coverage, the paging frame SFN covers all paging frames in resources, that is, a set of the paging frames to which the subframe used for sending paging information belongs as calculated by the first base station is all paging frames.

For another example, if the value of the paging parameter nB of the first base station is T/2, N takes the minimum value between T and nB, that is, N = T/2. Substitute N = T/2 in the preceding formula (2). Then the preceding formula (2) changes to the following formula (4):

$$SFN \bmod T = 2 \times UE\_ID \bmod T/2 \qquad (4)$$

As can be seen from the preceding formula (4), a set of the paging frames to which the subframe used for sending paging information belongs as calculated by the first base station is all frames of even numbers.

For another example, if the value of nB is T/4, N takes the minimum value between T and nB, that is, N = T/4. Substitute N = T/4 in the preceding formula (2). Then the preceding formula (2) changes to the following formula (5):

$$SFN \bmod T = 4 \times UE\_ID \bmod T/4 \qquad (5)$$

As can be seen from the preceding formula (5), a set of the paging frames to which the subframe used for sending paging information belongs as calculated by the first base station is all paging frames whose SFNs are integer multiples of 4.

203. The first base station sends the calculated subframe number and the calculated frame number of the paging frame to a second base station, so that the second base station configures a subframe corresponding to the subframe number of a paging frame corresponding to the frame number as an almost blank subframe (almost blank subframe, ABS), or the second base station stops sending information in a subframe corresponding to the subframe number of a paging frame corresponding to the frame number.

In the embodiment of the present invention, an almost blank subframe (ABS) has extremely little influence, which may be ignored, on paging interference, or in other words its influence on paging interference is within an allowed range. For details about an almost blank subframe, reference may be made to relevant content of the 3rd Generation Partnership Project (The 3rd Generation Partnership Project, 3GPP) standard. Details are not repeated in the embodiment of the present invention.

In the embodiment of the present invention, after receiving the subframe number and the frame number of the paging frame from the first base station, the second base station may configure the subframe of the paging frame as an almost blank subframe to avoid paging interference to the user equipment in connected state in the first base station, where the subframe corresponds to the subframe number and the paging frame corresponds to the frame number.

In an optional implementation manner, after receiving the subframe number and the frame number of the paging frame sent by the first base station, the second base station may also stop sending information in the subframe of the paging frame to avoid paging interference to the user equipment in connected state in the first base station, where the subframe corresponds to the subframe number and the paging frame corresponds to the frame number.

For example, the first base station may send the calculated subframe number and the calculated frame number of the paging frame to the second base station through an interface with the second base station, or the first base station may send the calculated subframe number and the calculated frame number of the paging frame to the second base station through another dedicated channel. This is not restricted in the embodiment of the present invention. The interface between the first base station and the second base station includes a wired interface and a wireless interface. This is not restricted in the embodiment of the present invention.

In the embodiment of the present invention, the first base station may send the calculated subframe number and the calculated frame number of the paging frame to which the subframe belongs to the second base station through notification signaling, where the notification signaling uses a bit mapping mode and a length of the notification information is equal to a product of multiplying an indication period (in frames) of the notification signaling and (nB/T).

In the embodiment of the present invention, the second base station may further send configuration information of the almost blank subframe to the first base station. For example, the second base station may send configuration information of the almost blank subframe to the first base station through notification signaling, where the notification signaling may be sent after being combined in notification signaling used to protect data transmission or broadcast signal transmission, or may be independently sent.

In the embodiment of the present invention, the first base station and the second base station are base stations located in a heterogeneous network. Therefore, coverage of the first base station intersects with coverage of the second base station, and spectrum resources configured for the first base station are completely or partly the same as spectrum resources configured for the second base station.

The first base station may be a macro base station, or a low-power base station such as a micro base station, a pico base station, or a relay node instead of being restricted in the embodiment of the present invention.

In an optional implementation manner, the determining, by the first base station, a UE in connected state in the preceding step 201 may be implemented specifically through the following manner: The first base station determines a UE in connected state, wherein a signal-to-interference ratio (Signal to Interference Ratio, SIR) of the user equipment is less than or equal to a preset threshold.

For example, a preset SIR threshold of -4 dB may be set in advance on the first base station, where the preset SIR threshold of -4 dB indicates maximum interference that the first base station can tolerate. After determining UEs in connected state, the first base station may further select a UE with an SIR less than or equal to -4 dB from the determined UEs in connected state, then calculate the subframe number of a subframe required for paging the selected UE and the frame number of the paging frame to which the subframe belongs, and send the subframe number and the frame number to the second base station, so that the second base station configures the subframe of the paging frame as an almost blank subframe, where the subframe corresponds to the subframe number and the paging frame corresponds to the frame number, thereby avoiding paging interference to the UE in connected state in the first NodeB with an SIR less than or equal to the preset threshold.

In the embodiment of the present invention, the preset SIR threshold may be preset according to an actual scenario where the first base station is located, but is not limited to -4 dB. For example, the preset SIR threshold may also be -5 dB, -6 dB, or the like instead of being restricted in the embodiment of the present invention.

In the embodiment of the present invention, when a UE determined by the first base station is in connected state and has an SIR less than or equal to the preset threshold, the second base station may configure a subframe in a paging frame that corresponds to the UE in connected state in the first base station with an SIR less than or equal to the preset threshold as an almost blank subframe, and does not need to configure subframes in paging frames that correspond to all UEs in connected state in the first base station as almost blank subframes; therefore, in the embodiment of the present invention, paging interference to a UE in connected state with an SIR less than or equal to the preset threshold in a heterogeneous network may be avoided, and a waste of resources in an interfering cell is further reduced.

In the embodiment of the present invention, after determining a UE in connected state, a first base station calculates a subframe number of a subframe required for paging the UE and a frame number of a paging frame to which the subframe belongs, and sends the calculated subframe number and the calculated frame number of the paging frame to a second base station, so that the second base station may configure the subframe of the paging frame as an almost blank subframe, where the subframe corresponds to the subframe number and the paging frame corresponds to the frame number, thereby avoiding paging interference generated by the second base station to the user equipment in connected state in the first base station. In the embodiment of the present invention, only paging information of a UE in connected state in the first base station is protected and it is unnecessary to protect paging information of all UEs of the first base station; and accordingly, the second base station may configure the subframe in the paging frame that corresponds to the UE in connected state in the first base station as an almost blank subframe and does not need to configure subframes of paging frames that correspond to all UEs of the first base station as almost blank subframes; therefore, in the embodiment of the present invention, paging interference to a UE in connected state in a heterogeneous network may be avoided and at the same time a waste of resources in an interfering cell is reduced.

For a better understanding of the embodiment of the present invention, specific embodiments are given as follows for detailed explanation.

**Embodiment 1**

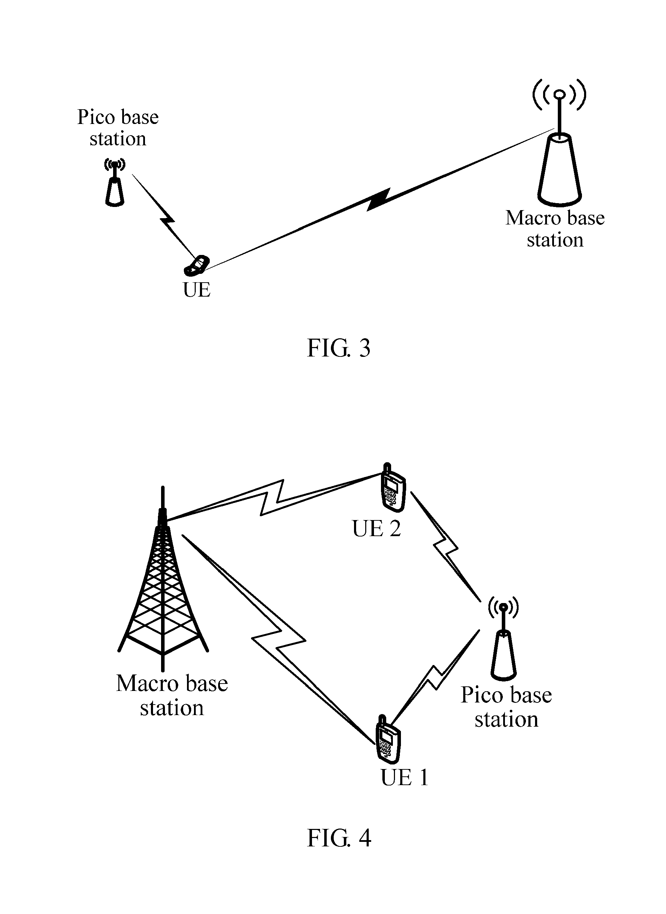

Refer to FIG. 3, which is a schematic diagram of a scenario of paging interference between a macro base station and a pico base station according to Embodiment 1 of the present invention.

As shown in FIG. 3, a macro base station and a pico base station simultaneously exist in a heterogeneous network, where the macro base station determines a UE in connected state within its coverage and the UE is subject to paging interference from the pico base station. That is, the macro base station serves as the first base station and the pico base station serves as the second base station.

It is assumed that the paging parameter nB pre-configured by the macro base station is equal to T, the actual paging cycle of the UE is T, and the equivalent identifier of the UE is UE_ID. Then the macro base station learns $N = T$ ($N$ is a minimum value between T and nB) and substitutes $N = T$ in the preceding formula (2) to calculate the set of a paging frame used by the macro base station to send paging information as all paging frames; and further substitutes $N_s = 1$ ($N_s$ is a maximum value between 1 and nB/T) and $N = T$ in the preceding formula (1) to calculate the paging opportunity i_s for the macro base station to send paging information as 0. As can be seen from Table 1, the subframe used by the macro base station to send paging information is the subframe whose subframe number is 0.

After calculating the subframe 0 for sending paging information and all paging frames to which the subframe 0 belongs, the macro base station may send, through an interface with the pico base station, the calculated subframe number of the subframe 0 used for sending paging information and frame numbers of all paging frames to which the subframe 0 belongs to the pico base station.

After receiving the subframe number of the subframe 0 used for sending paging information and the frame numbers of all paging frames to which the subframe 0 belongs from the macro base station, the pico base station configures the subframe whose subframe number is 0 in all the paging frames as an almost blank subframe, thereby avoiding paging interference generated by the pico base station to the UE in connected state in the macro base station.

Optionally, the pico base station may send configuration information of the almost blank subframe to the macro base station.

In the embodiment of the present invention, after determining a UE in connected state, a macro base station may calculate a subframe number of a subframe required for paging the UE in connected state and a frame number of a paging frame to which the subframe belongs, and send the calculated subframe number and the calculated frame number of the paging frame to a pico base station, so that the pico base station may configure the subframe of the paging frame as an almost blank subframe, where the subframe corresponds to the subframe number and the paging frame corresponds to the frame number, thereby avoiding paging interference generated by the pico base station to the UE in connected state in the macro base station. In the embodiment of the present invention, only paging information of a UE in connected state in the macro base station is protected and it is unnecessary to protect paging information of all UEs of the macro base station; and accordingly, the pico base station may configure the subframe of a paging frame that corresponds to the UE in connected state in the macro base station as an almost blank subframe and does not need to configure subframes of paging frames that correspond to all UEs of the macro base station as almost blank subframes; therefore, in the embodiment of the present invention, paging interference to a UE in connected state in a heterogeneous network may be avoided and at the same time a waste of resources in an interfering cell is reduced.

**Embodiment 2**

Refer to FIG. 4, which is a schematic diagram of a scenario of paging interference between a macro base station and a pico base station according to Embodiment 2 of the present invention.

As shown in FIG. 4, a macro base station and a pico base station simultaneously exist in a heterogeneous network, where UE 1 and UE 2 are user equipments in connected state in the pico base station and subject to paging interference from the macro base station. That is, the pico base station serves as a first base station and the macro base station serves as a second base station.

It is assumed that the value of the paging parameter nB pre-configured by the pico base station is 2T, the actual paging cycles T of both UE 1 and UE 2 are 640 ms, and the equivalent identifier UE_IDs of UE 1 and UE 2 are 12 and 37, respectively. Then the pico base station learns N = T (N is a minimum value between T and nB). For UE 1, the pico base station may substitute N = T and UE_ID = 12 in the preceding formula (2) to calculate the frame number of a paging frame used by the pico base station to send paging information to UE 1 as SFN = 12; and further substitute $N_s$ = 2 ($N_s$ is a maximum value between 1 and nB/T), N = T, and UE_ID = 12 in the preceding formula (1) to calculate the paging opportunity for the pico base station to send paging information to UE 1 as 0. As can be seen from Table 1, the subframe used by the pico base station to send paging information to UE 1 is subframe 0; whereas for UE 2, the pico base station may substitute N = T and UE_ID = 37 in the preceding formula (2) to calculate a paging frame used by the pico base station to send paging information to UE 2 as SFN = 37; and further substitute $N_s$ = 2 ($N_s$ is the maximum value between 1 and nB/T), N = T, and UE_ID = 37 in the preceding formula (1) to calculate the paging opportunity for the pico base station to send paging information to UE 2 as 0. Then according to Table 1, the subframe used by the pico base station to send paging information to UE 2 is subframe 0.

After calculating the subframe 0 for sending paging information to UE 1 and the paging frame 12 to which the subframe 0 belongs, the pico base station may send, through an interface with the macro base station, the calculated subframe number of the subframe 0 used for sending paging information and the calculated frame number of the paging frame 12 to which the subframe 0 belongs to the macro base station. Similarly, after calculating the subframe 0 for sending paging information to UE 2 and the paging frame 37 to which the subframe 0 belongs, the pico base station may send, through the interface with the macro base station, the calculated subframe number of the subframe 0 used for sending paging information and the calculated frame number of the paging frame 37 to which the subframe 0 belongs to the macro base station.

After receiving the subframe number of the subframe 0 used for sending paging information and the frame numbers of the paging frames 12 and 37 to which the subframe 0 belongs from the pico base station, the macro base station configures the subframe 0 of the paging frames 12 and 37 as an almost blank subframe, thereby avoiding paging interference generated by the macro base station to the UEs in connected state in the pico base station.

In the embodiment of the present invention, the pico base station may use 64 × 2 = 128 bits, which correspond to all subframes 0 and 5 within 640 ms. If a bit is 1, it indicates that the pico base station will send paging information in this subframe. This means that the macro base station is required to configure this subframe as an almost blank subframe to avoid paging interference generated by the macro base station to a UE in connected state in the pico base station.

In the embodiment of the present invention, after determining UEs in connected state, a pico base station may calculate a subframe number of a subframe required for paging these UEs in connected state and a frame number of a paging frame to which the subframe belongs, and send the calculated subframe numbers and the calculated frame number of the paging frame to a macro base station, so that the macro base station may configure the subframe of the paging frame as an almost blank subframe, where the subframe corresponds to the subframe number and the paging frame corresponds to the frame number, thereby avoiding paging interference generated by the macro base station to the UEs in connected state in the pico base station. In the embodiment of the present invention, only paging information of UEs in connected state in the pico base station is protected and it is unnecessary to protect paging information of all UEs of the pico base station; and accordingly, the macro base station may configure the subframe of the paging frame that corresponds to the UE in connected state in the pico base station as an almost blank subframe and does not need to configure subframes of paging frames that correspond to all UEs of the pico base station as almost blank subframes; therefore, in the embodiment of the present invention, paging interference to UEs in connected state in a heterogeneous network may be avoided and at the same time a waste of resources in an interfering cell is reduced.

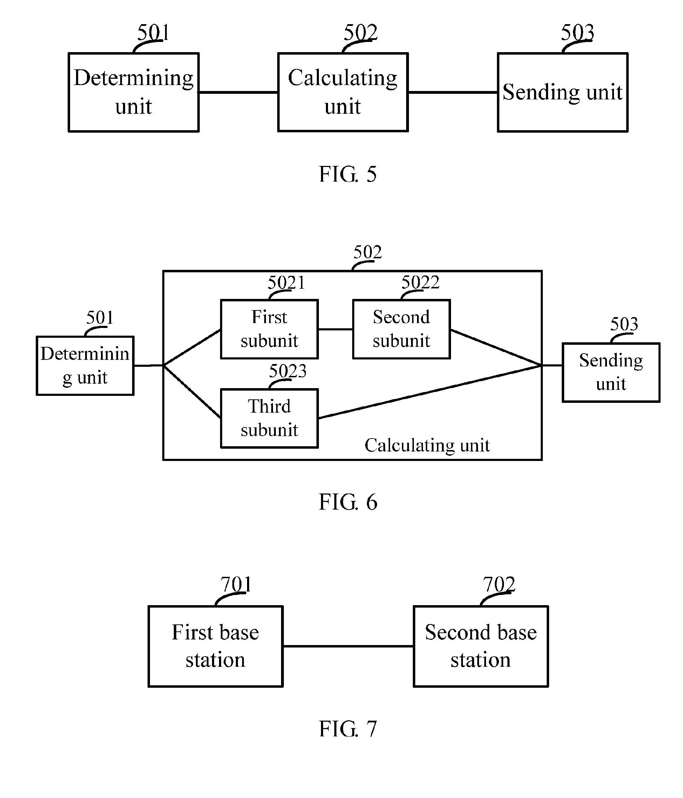

Refer to FIG. 5, which is a schematic structural diagram of a base station according to an embodiment of the present invention, which is applied in a heterogeneous network to implement steps in the preceding method embodiments. The base station includes a determining unit 501, a calculating unit 502, and a sending unit 503. The determining unit 501 is adapted to determine a user equipment in connected state; the calculating unit 502 is adapted to calculate a subframe number of a subframe used for sending paging information and a frame number of a paging frame to which the subframe belongs, where the paging information is used for paging the user equipment in connected state determined by the determining unit 501; and the sending unit 503 is adapted to send the subframe number and the frame number of the paging frame calculated by the calculating unit 502 to a second base station, so that the second base station configures a subframe corresponding to the subframe number of a paging frame corresponding to the frame number as an almost blank subframe, or the second base station stops sending information in a subframe corresponding to the subframe number of a paging frame corresponding to the frame number.

In an optional implementation manner, the determining unit 501 is further adapted to determine a UE in connected state with an SIR less than or equal to a preset threshold.

In the embodiment of the present invention, the sending unit 503 may be specifically adapted to send the subframe number and the frame number of the paging frame calculated by the calculating unit 502 to the second base station through notification signaling, where the notification signaling uses a bit mapping mode and a length of the notification information is equal to a product of multiplying an indication period of the notification signaling and (nB/T).

In the embodiment of the present invention, the second base station may further send configuration information of the almost blank subframe to the base station. For example, the second base station may send the configuration of the almost blank subframe to the base station through notification signaling, where the notification signaling may be merged and sent in notification signaling used to protect data transmission or broadcast signal transmission, or may be independently sent.

The base station provided in the embodiment of the present invention and the second base station are base stations located in a heterogeneous network. Therefore, coverage of the base station provided in the embodiment of the present invention intersects with coverage of the second base station, and spectrum resources configured for the base station provided in the embodiment of the present invention are completely or partly the same as spectrum resources configured for the second base station.

Refer to FIG. 6, which is a schematic structural diagram of another base station according to an embodiment of the present invention, which is applied in a heterogeneous network. The base station shown in FIG. 6 is obtained through refinement of the base station shown in FIG. 5. The calculating unit 502 may include:

a first subunit 5021, adapted to calculate a paging opportunity i_s for sending paging information according to a formula $i\_s = floor(UE\_ID/N) \bmod N_s$;

a second subunit 5022, adapted to obtain a subframe number of a subframe used for sending paging information from a saved mapping between i_s and subframe number according to the i_s calculated by the first subunit 5021; and

a third subunit 5023, adapted to calculate a frame number SFN of a paging frame to which the subframe used for sending paging information belongs according to a formula $SFN \bmod T = (T/N) \times (UE\_ID \bmod N)$; where:

floor (*) indicates rounding operation; UE_ID indicates an equivalent identifier of a user equipment; N is a minimum value between an actual paging cycle T of the user equipment and a preset paging parameter nB; $N_s$ is a maximum value between 1 and nB/T; mod indicates modulo operation; and a value range of nB is {4T, 2T, T, T/2, T/4, T/8, T/16, T/32}.

In the embodiment of the present invention, after the determining unit 501 determines a UE in connected state, the calculating unit 502 calculates a subframe number of a subframe required for paging the UE and the frame number of the paging frame to which the subframe belongs, and the sending unit 503 sends the subframe number and the frame number of the paging frame calculated by the calculating unit 502 to a second base station, so that the second base station may configure the subframe of the paging frame as an almost blank subframe or stop sending information in the subframe of the paging frame, where the subframe corresponds to the subframe number and the paging frame corresponds to the frame number, thereby avoiding paging interference generated by the second base station to the UE in connected state in the base station. In the embodiment of the present invention, only paging information of a UE in connected state in the base station is protected and it is unnecessary to protect paging information of all UEs of the base station; and accordingly, the second base station may configure the subframe of the paging frame that corresponds to the UE in connected state in the base station as an almost blank subframe and does not need to configure subframes of paging frames that correspond to all UEs of the base station as almost blank subframes; therefore, in the embodiment of the present invention, paging interference to a UE in connected state in a heterogeneous network may be avoided and at the same time a waste of resources in an interfering cell is reduced.

Refer to FIG. 7, which is a schematic structural diagram of a system for coordinating paging resource in a heterogeneous network according to an embodiment of the present invention. The system may include a first base station 701 and a second base station 702.

The first base station 701 may be a macro base station, or a low-power base station such as a micro base station, a pico base station, or a relay node instead of being restricted in the embodiment of the present invention; and the second base station 702 may be a macro base station, or a low-power base station such as a micro base station, a pico base station, or a relay node instead of being restricted in the embodiment of the present invention.

The first base station 701 is adapted to determine a UE in connected state and calculate a subframe number of a subframe used for sending paging information and a frame number of a paging frame to which the subframe belongs, where the paging information is used for paging the UE in connected state in the first base station 701; and the first base station 701 sends the calculated subframe number and the calculated frame number of the paging frame to the second base station 702. The second base station 702 is adapted to receive the subframe number and the frame number of the paging frame from the first base station 701, and configure a subframe corresponding to the subframe number of a paging frame corresponding to the frame number as an almost blank subframe, or stop sending information in a subframe corresponding to the subframe number of a paging frame corresponding to the frame number.

For example, the first base station 701 may send the calculated subframe number and the calculated frame number of the paging frame to the second base station 702 through an interface with the second base station 702, or the first base station 701 may send the calculated subframe number and the calculated frame number of the paging frame to the second base station 702 through another dedicated channel. This is not restricted in the embodiment of the present invention. The interface between the first base station 701 and the second base station 702 includes a wired interface and a wireless interface. This is not restricted in the embodiment of the present invention.

In the embodiment of the present invention, the first base station 701 may send the calculated subframe number and the calculated frame number of the paging frame to which the subframe belongs to the second base station 702 through notification signaling, where the notification signaling uses a bit mapping mode and a length of the notification information is equal to a product of multiplying an indication period (in frames) of the notification signaling and (nB/T).

In the embodiment of the present invention, the second base station 702 may further send configuration information of the almost blank subframe to the first base station 701. For example, the second base station 701 may send the configuration information of the almost blank subframe to the first base station 701 through notification signaling, where the notification signaling may be merged and sent in notification signaling used to protect data transmission or broadcast signal transmission, or may be independently sent.

In the embodiment of the present invention, the first base station 701 and the second base station 702 are base stations located in a heterogeneous network. Therefore, coverage of the first base station 701 intersects with coverage of the second base station 702, and spectrum resources configured for the first base station 701 are completely or partly the same as spectrum resources configured for the second base station 702.

In an optional implementation manner, a UE in connected state determined by the first base station 701 may be a UE in connected state with an SIR less than or equal to a preset threshold.

In the embodiment of the present invention, the structure of the first base station 701 is the same as that shown in FIG. 5 or FIG. 6, and details are not repeated in the embodiment of the present invention.

In the embodiment of the present invention, after determining a UE in connected state, the first base station 701 calculates a subframe number of a subframe required for paging the UE and the frame number of the paging frame to which the subframe belongs, and sends the calculated subframe number and the calculated frame number of the paging frame to the second base station 702, so that the second base station 702 may configure the subframe of the paging frame as an almost blank subframe or stop sending information in the subframe of the paging frame, where the subframe corresponds to the subframe number and the paging frame corresponds to the frame number, thereby avoiding paging interference generated by the second base station 702 to the UE in connected state in the first base station 701. In the embodiment of the present invention, only paging information of a UE in connected state in the first base station 701 is protected and it is unnecessary to protect paging information of all UEs of the first base station 701; and accordingly, the second base station 702 may configure the subframe of a paging frame that corresponds to the UE in connected state in the first base station 701 as an almost blank subframe and does not need to configure subframes of paging frames that correspond to all UEs of the first base station 701 as almost blank subframes; therefore, in the embodiment of the present invention, paging interference to a UE in connected state in a heterogeneous network may be avoided and at the same time a waste of resources in an interfering cell is reduced.

In addition, a specific manner for a base station or a system provided in an embodiment of the present invention to coordinate paging resource in a heterogeneous network is similar to that of the preceding method embodiments of the present invention, and details are not repeated herein.

Persons of ordinary skill in the art may understand that all or a part of the steps of the method in the embodiments of the present invention may be implemented by a program instructing relevant hardware. The program may be stored in a computer readable storage medium. When the program is run, the steps of the method in the embodiments of the present invention are performed. The storage medium may include any medium that is capable of storing program codes, such as a Read-Only Memory (Read-Only Memory, ROM), a Random Access Memory (Random Access Memory, RAM), a magnetic disk, or an optical disk.

A method, an apparatus, and a system for coordinating paging resource in a heterogeneous network that are provided in the embodiments of the present invention are introduced in detail in the foregoing. In this specification, specific examples are used for illustrating principles and implementation manners of the present invention. The foregoing descriptions of the embodiments are merely used to help understand the methods and core ideas of the present invention. Meanwhile, persons of ordinary skill in the art may make modifications to the specific implementation manners and application scopes according to the idea of the present invention. In conclusion, the content of this specification should not be construed as a limitation on the present invention.

**Claims**

1.  A method for coordinating paging resource in a heterogeneous network, comprising:

    determining, by a first base station, a user equipment in connected state;
    calculating, by the first base station, a subframe number of a subframe used for sending paging information and a frame number of a paging frame to which the subframe belongs, wherein the paging information is used for paging the user equipment in connected state; and
    sending, by the first base station, the calculated subframe number and the calculated frame number of the paging frame to a second base station, so that the second base station configures a subframe corresponding to the subframe number of a paging frame corresponding to the frame number as an almost blank subframe, or the second base station stops sending information in a subframe corresponding to the subframe number of a paging frame corresponding to the frame number.

2.  The method according to claim 1, wherein the determining, by a first base station, a user equipment in connected state comprises:

    determining, by the first base station, a user equipment in connected state, wherein a signal-to-interference ratio of the user equipment is less than or equal to a preset threshold.

3.  The method according to claim 1, wherein the calculating, by the first base station, a subframe number of a subframe used for sending paging information and a frame number of a paging frame to which the subframe belongs comprises:

    calculating, by the first base station, a paging opportunity i_s for sending paging information according to a formula $i\_s = floor\,(UE\_ID/N)\ mod\ N_s$, and obtaining the subframe number of the subframe used for sending paging information from a saved mapping between i_s and subframe number according to the calculated i_s; and
    calculating, by the first base station, the frame number SFN of a paging frame to which the subframe used for sending paging information belongs according to a formula $SFN\ mod\ T = (T/N) \times (UE\_ID\ mod\ N)$; wherein:
    floor (*) indicates rounding operation; UE_ID indicates an equivalent identifier of the user equipment in connected state; N is a minimum value between an actual paging cycle T of the user equipment and a preset paging parameter nB; $N_s$ is a maximum value between 1 and nB/T; mod indicates modulo operation; and a value range of the nB is {4T, 2T, T, T/2, T/4, T/8, T/16, T/32}.

4.  The method according to claim 1, wherein the sending, by the first base station, the calculated subframe number and the calculated frame number of the paging frame to a second base station comprises:

    sending, by the first base station, the calculated subframe number and the calculated frame number of the paging frame to the second base station through notification signaling in bit mapping mode, wherein a length of the notification information is a product of multiplying an indication period of the notification signaling and (nB/T), the nB is a preset paging parameter, the T is an actual paging cycle of the user equipment, and a value range of the nB is {4T, 2T, T, T/2, T/4, T/8, T/16, T/32}.

5. The method according to any one of claims 1 to 4, further comprising:

sending, by the second base station, configuration information of the almost blank subframe to the first base station through notification signaling, wherein the notification signaling is merged and sent in notification signaling used to protect data transmission or broadcast signal transmission, or is independently sent.

6. The method according to any one of claims 1 to 4, wherein coverage of the first base station intersects with coverage of the second base station, and spectrum resources configured for the first base station are completely or partly the same as spectrum resources configured for the second base station.

7. A base station, located together with a second base station in a heterogeneous network and comprising:

a determining unit, adapted to determine a user equipment in connected state;
a calculating unit, adapted to calculate a subframe number of a subframe used for sending paging information and a frame number of a paging frame to which the subframe belongs, wherein the paging information is used for paging the user equipment in connected state determined by the determining unit; and
a sending unit, adapted to send the subframe number and the frame number of the paging frame calculated by the calculating unit to the second base station, so that the second base station configures a subframe corresponding to the subframe number of a paging frame corresponding to the frame number as an almost blank subframe, or the second base station stops sending information in a subframe corresponding to the subframe number of a paging frame corresponding to the frame number.

8. The base station according to claim 7, wherein:

the determining unit is further adapted to determine a user equipment in connected state, wherein a signal-to-interference ratio of the user equipment is less than or equal to a preset threshold.

9. The base station according to claim 7, wherein the calculating unit comprises:

a first subunit, adapted to calculate a paging opportunity i_s for sending paging information according to a formula i_s = floor (UE_ID/N) mod $N_s$;
a second subunit, adapted to obtain the subframe number of the subframe used for sending paging information from a saved mapping between i_s and subframe number according to the i_s calculated by the first subunit; and
a third subunit, adapted to calculate the frame number SFN of a paging frame to which the subframe used for sending paging information belongs according to a formula SFN mod T = (T/N) $\times$ (UE_ID mod N); wherein floor (*) indicates rounding operation; UE_ID indicates an equivalent identifier of the user equipment in connected state; N is a minimum value between an actual paging cycle T of the user equipment and a preset paging parameter nB; $N_s$ is a maximum value between 1 and nB/T; mod indicates modulo operation; and a value range of the nB is {4T, 2T, T, T/2, T/4, T/8, T/16, T/32}.

10. The base station according to claim 7, wherein:

the sending unit is further adapted to send the subframe number and the frame number of the paging frame calculated by the calculating unit to the second base station through notification signaling in bit mapping mode, wherein a length of the notification information is a product of multiplying an indication period of the notification signaling and (nB/T), the nB is a preset paging parameter, the T is an actual paging cycle of the user equipment, and a value range of the nB is {4T, 2T, T, T/2, T/4, T/8, T/16, T/32}.

11. The base station according to any one of claims 7 to 10, wherein coverage of the base station intersects with coverage of the second base station, and spectrum resources configured for the base station are completely or partly the same as spectrum resources configured for the second base station.

12. A system for coordinating paging resource in a heterogeneous network, comprising the base station according to any one of claims 7 to 11 as a first base station and further comprising a second base station, wherein the second base station is adapted to receive the subframe number and the frame number of the paging frame from the first base station, and configure a subframe corresponding to the subframe number of a paging frame corresponding to the frame number as an almost blank subframe, or stop sending information in a subframe corresponding to the subframe number of a paging frame corresponding to the frame number.

Macro base station

Lower-power
base station

UE served by the
low-power base station

FIG. 1

A first base station determines a UE in connected state 201

The first base station calculates a subframe number of a subframe used for sending paging information and a frame number of a paging frame to which the subframe belongs, where the paging information is used for paging the UE in connected state 202

The first base station sends the calculated subframe number and the calculated frame number of the paging frame to a second base station, so that the second base station configures a subframe corresponding to the subframe number of a paging frame corresponding to the frame number as an almost blank subframe, or the second base station stops sending information in a subframe corresponding to the subframe number of a paging frame corresponding to the frame number 203

FIG. 2

Pico base
station

Macro base
station

UE

FIG. 3

UE 2

Macro base
station

Pico base
station

UE 1

FIG. 4

501

Determining unit

502

Calculating unit

503

Sending unit

FIG. 5

502

5021

First subunit

5022

Second subunit

501

Determining unit

5023

Third subunit

Calculating unit

503

Sending unit

FIG. 6

701

First base station

702

Second base station

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201010538735